# EUROPÄISCHE PATENTANMELDUNG

(11) **EP 4 450 346 A1**
(43) Veröffentlichungstag der Anmeldung: **23.10.2024**
(21) Anmeldenummer: 24158617.1
(22) Anmeldetag: 20.02.2024
(51) Int. Cl.: B60W 10/06, F01N 3/18, B60W 10/02, B60W 10/11, B60W 20/16, B60W 30/194, F16H 61/16

(54) **VERFAHREN ZUM BETREIBEN EINES ANTRIEBSSTRANGS IN EINEM KRAFTFAHRZEUG SOWIE KRAFTFAHRZEUG**

(30) Priorität: 18.04.2023 DE 102023203541
(71) Anmelder: VOLKSWAGEN AG, 38440 Wolfsburg (DE)
(72) Erfinder: Paukner, Stefan, 38442 Wolfsburg (DE); Schlüter, Lars, 38458 Velpke (DE); Baron von Ceumern-Lindenstjerna, Falk-Christian, 38124 Braunschweig (DE); Kaack, Michael, 38531 Rötgesbüttel (DE)

(57) **Zusammenfassung**

Die Erfindung betrifft ein Verfahren zum Betreiben eines Antriebsstrangs (10) in einem Kraftfahrzeug (100). Der Antriebsstrang (10) weist einen Verbrennungsmotor (20) mit einem dem Verbrennungsmotor (20) zugeordneten Abgasnachbehandlungssystem (30) sowie ein Getriebe (50) zur Kraftübertragung eines von dem Verbrennungsmotor (20) erzeugten Antriebsmoments an zumindest eine Antriebsachse (12, 14) des Kraftfahrzeuges (100) auf. Das Verfahren umfasst folgende Schritte:
- Starten des Verbrennungsmotors (20), wobei eine Drehmoment-übertragende Verbindung zwischen dem Verbrennungsmotor (20) und der Antriebsachse (12, 14) unterbrochen wird,
- Aufheizen zumindest einer Abgasnachbehandlungskomponente (32, 34, 36, 38) des Abgasnachbehandlungssystems (30) durch einen Abgasstrom (70) des Verbrennungsmotors (20), während die Drehmoment-übertragende Verbindung unterbrochen ist, bis zumindest eine Freigabebedingung erreicht ist,
- Schließen der Drehmoment-übertragenden Verbindung zwischen dem Verbrennungsmotor (20) und der Antriebsachse (12, 14), wenn die Freigabebedingung erreicht ist, sodass ein Antriebsmoment des Verbrennungsmotors (20) auf die Antriebsachse (12, 14) übertragen wird.

Die Erfindung betrifft ferner ein Steuergerät (60) sowie ein Kraftfahrzeug (100) zur Durchführung eines solchen Verfahrens.

## Beschreibung

Die Erfindung betrifft ein Verfahren zum Betreiben eines Antriebsstrangs in einem Kraftfahrzeug sowie ein Kraftfahrzeug mit einem Steuergerät zur Durchführung eines solchen Verfahrens gemäß dem Oberbegriff der unabhängigen Patentansprüche.

Im Hinblick auf eine weitere Verschärfung der Abgasnormen, beispielsweise mit Einführung der EU7-Norm, ist es erforderlich, insbesondere die Kaltstartemissionen, welche einen Großteil der gesamten Emissionen ausmachen, signifikant zu verringern. Im Kaltstartbetrieb, also unmittelbar nach Start des Verbrennungsmotors sind die Abgasnachbehandlungskomponenten in der Regel noch nicht hinreichend aufgewärmt, um eine Konvertierung der bei der Verbrennung des Kraftstoffs entstehenden Rohemissionen zu ermöglichen. Dies führt insbesondere zu in der Kaltstartphase erhöhten Abgasemissionen, die selbst bei einer vollständigen Konvertierung der Rohemissionen nach der Kaltstartphase dazu führen, dass die Grenzwerte nicht mehr eingehalten werden. Die Kaltstartemissionen werden in ihrer Höhe dabei signifikant durch die Motorlast in der Kaltstartphase beeinflusst. Dabei führen insbesondere hohe Motorlasten in der Kaltstartphase zu hohen Rohemissionen des Verbrennungsmotors und somit zu einem signifikanten Anstieg der Kaltstartemissionen, welche unkonvertiert in die Umwelt emittiert werden. Um dies zu vermeiden, wären bei aus dem Stand der Technik bekannten Verbrennungsmotoren mit Abgasnachbehandlungssystemen gegebenenfalls Kundenrestriktionen wie eine Einschränkung der Leistung unmittelbar nach dem Start des Verbrennungsmotors notwendig, um eine Einhaltung der EU7-Emissionsgrenzwerte unter allen geforderten Randbedingungen sicherzustellen.

Zur Erfüllung der EU6-Abgasnorm bei Ottomotoren haben sich Abgasnachbehandlungssysteme verbreitet, welche einen oder mehrere Drei-Wege-Katalysatoren sowie einen Partikelfilter umfassen. Ein Drei-Wege-Katalysator ist ein Fahrzeugkatalysator für die Abgasnachbehandlung von Verbrennungsmotoren, bei der Kohlenstoffmonoxid (CO), Stickoxide (NOx) und unverbrannte Kohlenwasserstoffe (HC) zu Kohlenstoffdioxid (CO2), molekularem Stickstoff (N2) und Wasserdampf (H2O) umgewandelt werden. Aus der gleichzeitigen Umwandlung dieser drei Luftschadstoffe leitet sich der Name des Katalysators ab.

Ferner ist zur Sicherstellung der Einhaltung der Emissionsnorm eine enge Überwachung einer entsprechenden Steuerung oder Regelung des Verbrennungsmotors sowie des Abgasnachbehandlungssystems notwendig.

Aus der US 2015 / 0 032 356 A1 ist ein Verfahren zum Aufheizen eines Katalysators in der Abgasanlage eines Kraftfahrzeuges bekannt. Dabei wird beim Anlassen des Motors die Motordrehzahl auf einer hohen Drehzahl gehalten. Diese hohe Drehzahl wird auch beibehalten, wenn der Fahrer zu einem Zeitpunkt I das Getriebe aus dem Leerlauf schaltet. Die Motordrehzahl wird gesenkt, wenn zu einem Zeitpunkt II ein Anzeichen dafür erkannt wird, dass der Fahrer losfahren möchte, zum Beispiel wenn er das Bremspedal loslässt.

Die US 2005 / 0 187 069 A1 beschreibt ein Verfahren zum Betreiben eines Verbrennungsmotors. Dabei stellt eine Motor-Leerlaufdrehzahl-Steuerungseinrichtung eine Ziel-Leerlaufdrehzahl für einen Nicht-Fahrbereich auf einen hohen Wert ein, um den Katalysator frühzeitig zu aktivieren, nachdem der Motor gestartet wurde. Wenn erkannt wird, dass das Automatikgetriebe von einem Nicht-Fahrbereich in einen Fahrbereich geschaltet wurde, wird die Soll-Leerlaufdrehzahl für eine vorgeschriebene Zeitspanne auf eine erste Fahr-Leerlaufdrehzahl abgesenkt. Nach Ablauf der vorgeschriebenen Zeit wird die Soll-Leerlaufdrehzahl noch weiter auf eine zweite Soll-Leerlaufdrehzahl während der Fahrt abgesenkt. Wenn die Ziel-Leerlaufdrehzahl auf die erste Fahr-Ziel-Leerlaufdrehzahl eingestellt ist, wird der Betrag der Zündzeitpunktverzögerung in Abhängigkeit von der tatsächlichen Motordrehzahl so eingestellt, dass der Zündzeitpunkt umso mehr verzögert wird, je höher die Motordrehzahl ist.

Der Erfindung liegt nun die Aufgabe zugrunde, die Kaltstartemissionen bei einem Verbrennungsmotor weiter zu verringern und möglichst schnell einen Betriebsbereich des Abgasnachbehandlungssystems zu erreichen, in welchem eine wirksame Konvertierung der limitierten Schadstoffemissionen im Abgasstrom des Verbrennungsmotors möglich ist.

Die Aufgabe wird durch ein Verfahren zum Betreiben eines Antriebsstrangs in einem Kraftfahrzeug gelöst. Der Antriebsstrang weist einen Verbrennungsmotor mit einem dem Verbrennungsmotor zugeordneten Abgasnachbehandlungssystem sowie ein Getriebe zur Kraftübertragung eines von dem Verbrennungsmotor erzeugten Antriebsmoments an zumindest einer Antriebsachse des Kraftfahrzeuges auf. Das Verfahren umfasst folgende Schritte:
- Starten des Verbrennungsmotors, wobei eine Drehmoment-übertragende Verbindung zwischen dem Verbrennungsmotor und der Antriebsachse unterbrochen ist oder unterbrochen wird,
- Aufheizen zumindest einer Abgasnachbehandlungskomponente des Abgasnachbehandlungssystems durch einen Abgasstrom des Verbrennungsmotors, während die Drehmoment-übertragende Verbindung unterbrochen ist, bis zumindest eine Freigabebedingung erreicht ist,
- Schließen der Drehmoment-übertragenden Verbindung zwischen dem Verbrennungsmotor und der Antriebsachse, wenn die Freigabebedingung erreicht ist, sodass ein Antriebsmoment des Verbrennungsmotors auf die Antriebsachse übertragen wird.

Durch die Leerlaufzeit kann mindestens eine Abgasnachbehandlungskomponente aufgeheizt werden bis eine Freigabebedingung erreicht ist und so können die Rohemissionen beim Fahrtbeginn signifikant gesenkt werden, da der eigentliche Start des Kraftfahrzeuges bereits mit vorgeheiztem Abgasnachbehandlungssystem erfolgt. Außerdem wird durch die Unterbrechung der Drehmoment-übertragenden Verbindung ein Überspringen der Leerlaufzeit verhindert, da in dieser Zeit kein Wunschmoment des Fahrers über das Gaspedal angenommen wird oder in Automatikgetrieben das Einlegen einer Fahrstufe blockiert wird. Dadurch können die streckenbezogenen Endrohremissionen minimiert werden. Zudem können die Kosten für das Abgasnachbehandlungssystem minimiert werden, da gegebenenfalls auf zusätzliche externe Heizmittel wie ein elektrisches Heizelement oder einen Brenner in der Abgasanlage verzichtet werden kann.

Durch die in den abhängigen Ansprüchen aufgeführten Merkmale sind vorteilhafte Ausgestaltungen und Verbesserungen sowie Weiterentwicklungen des im unabhängigen Anspruch genannten Verfahrens zum Betreiben eines Antriebsstrangs eines Kraftfahrzeugs möglich.

In bevorzugter Ausgestaltung des Verfahrens ist vorgesehen, dass die Freigabebedingung ein definiertes Zeitintervall ist, welches ab dem Start des Verbrennungsmotors beginnt. In dem vordefinierten Zeitintervall kann das Abgasnachbehandlungssystem aufgeheizt werden und der Fahrer bekommt beispielsweise über das Kombiinstrument eine genaue Zeitspanne angezeigt, die er bis zur Freigabe abwarten muss. Dabei liegt das definierte Zeitintervall vorzugsweise im Bereich von 5 Sekunden bis 20 Sekunden, vorzugsweise im Bereich von 10 Sekunden bis 15 Sekunden, wodurch ein signifikantes Aufheizen der Abgasnachbehandlungskomponente erreicht wird.

In einer bevorzugten Ausgestaltung des Verfahrens ist vorgesehen, dass das Getriebe als Automatikgetriebe ausgeführt ist und die Drehmoment-übertragende Verbindung zwischen dem Verbrennungsmotor und der Antriebsachse unterbrochen ist oder wird, indem das Einlegen einer Fahrstufe des Automatikgetriebes unterbunden wird, bis die Freigabebedingung erreicht ist. Unter einem Automatikgetriebe sind in diesem Zusammenhang insbesondere Automatikgetriebe in der Bauweise eines Doppelkupplungsgetriebes oder einer Wandler-Automatik zu verstehen. Unter dem Verhindern eines Einlegens einer Fahrstufe ist in diesem Zusammenhang insbesondere zu verstehen, dass das Getriebe in einer "P"-Stellung oder einer "N"-Stellung gehalten wird, und das Einlegen einer "D"-Stellung oder einer "R"-Stellung des Getriebes elektronisch oder elektromechanisch unterbunden wird. Dadurch kann auf einfache Art und Weise betriebssicher verhindert werden, dass ein Antriebsmoment des Verbrennungsmotors auf eine Antriebsachse des Kraftfahrzeugs übertragen wird und somit die Last für den Verbrennungsmotor erhöht wird. Dadurch lassen sich in der Warmlaufphase emissionsoptimale Betriebsbedingungen erreichen.

In einer weiteren bevorzugten Ausgestaltung des Verfahrens ist vorgesehen, dass das Getriebe als ein automatisiertes Schaltgetriebe ausgeführt ist, bei dem die Kupplung elektronisch oder elektromechanisch angesteuert wird. Dabei wird ebenfalls das Einlegen eines Gangs solange gesperrt, bis die Freigabebedingung erreicht ist. Dadurch kann auf einfache Art und Weise betriebssicher verhindert werden, dass ein Antriebsmoment des Verbrennungsmotors auf eine Antriebsachse des Kraftfahrzeugs übertragen wird und somit die Last für den Verbrennungsmotor erhöht wird. Dadurch lassen sich in der Warmlaufphase emissionsoptimale Betriebsbedingungen erreichen.

In weiterer bevorzugter Ausgestaltung des Verfahrens ist vorgesehen, dass die Freigabebedingung eine Ermittlung einer Temperatur zumindest einer Abgasnachbehandlungskomponente umfasst, wobei die Freigabe nach Erreichen einer definierten Mindesttemperatur für die Abgasnachbehandlungskomponente erfolgt. So erfolgt die Fahrtfreigabe erst wenn das Abgasnachbehandlungssystem eine bestimmte Betriebstemperatur erreicht und somit einen bestimmen Wirkungsgrad hat. So kann sichergestellt werden, dass das Abgasnachbehandlungssystem zu Fahrtbeginn einen Mindestwirkungsgrad aufzeigt und so die Endrohremissionen gesenkt werden.

In weiterer bevorzugter Ausgestaltung des Verfahrens ist vorgesehen, dass die Freigabebedingung eine Ermittlung eines Wärmeeintrags in das Abgasnachbehandlungssystem umfasst, wobei die Freigabe nach Erreichen einer definierten Wärmemenge in das Abgasnachbehandlungssystem erfolgt. Dies bietet eine weitere Möglichkeit der Steuerung der Abfahrtsverzögerung, wobei durch das Erreichen der vordefinierten Wärmemenge wieder eine Mindestwirksamkeit der Abgasnachbehandlung sichergestellt wird und so die Emissionen beim Fahrtbeginn gesenkt werden.

In weiterer bevorzugter Ausgestaltung des Verfahrens ist vorgesehen, dass die Freigabebedingung eine Ermittlung einer Konvertierungsleistung zumindest einer Abgasnachbehandlungskomponente umfasst, wobei eine Freigabe erfolgt, wenn die Konvertierungsleistung der Abgasnachbehandlungskomponente einen definierten Schwellenwert erreicht hat. Die Ermittlung der Konvertierungsleistung bietet die direkteste Kontrolle der Wirksamkeit der Abgasnachbehandlung und kann so sicherstellen, dass der Fahrtbeginn bis zu einem Punkt verzögert wird, an dem die Abgasnachbehandlung die Endrohremissionen auf einen vorgeschriebenen Wert sinken.

In weiterer bevorzugter Ausgestaltung des Verfahrens ist vorgesehen, dass die Freigabebedingung zumindest zwei Bedingungen aus der folgenden Gruppe umfasst:
- ein definiertes Zeitintervall ab dem Start des Verbrennungsmotors,
- eine definierte Mindesttemperatur für die Abgasnachbehandlungskomponente,
- eine definierte in das Abgasnachbehandlungssystem eingetragene Wärmemenge,
- ein definierter Schwellenwert der Konvertierungsleistung der Abgasnachbehandlungskomponente.

Die Kombination verschiedener Freigabebedingungen bietet den Vorteil einer höheren Leistungssicherheit des Abgasnachbehandlungssystems und der damit verbundenen Emissionssenkung.

In weiterer bevorzugter Ausgestaltung des Verfahrens ist vorgesehen, dass vom Start des Verbrennungsmotors bis zum Erreichen der Freigabe zusätzlich innermotorische Heizmaßnahmen ausgeführt werden, um den Zeitraum bis zum Erreichen der Freigabebedingung zu verkürzen. So kann zum Beispiel durch Verschiebung des Zündzeitpunkts nach hinten oder durch Sekundärluftpumpenbetrieb die Abgastemperatur erhöht werden und so die Abgasnachbehandlungskomponenten aufgeheizt werden, wodurch die Abgasnachbehandlungskomponenten schneller ihre Betriebstemperatur erreichen und der Zeitraum bis zur Fahrtfreigabe verkürzt wird.

In weiterer bevorzugter Ausgestaltung des Verfahrens ist vorgesehen, dass bis zum Erreichen der Freigabebedingung zusätzlich außermotorische Heizmaßnahmen durchgeführt werden, um den Zeitraum bis zum Erreichen der Freigabebedingung zu verkürzen. Durch elektrisch beheizte Katalysatoren oder Brennersysteme können die Abgasnachbehandlungssysteme zusätzlich außermotorisch beheizt werden, wodurch die Betriebstemperatur der Abgasnachbehandlung schneller erreicht wird und so die Leerlaufzeit verkürzt wird.

Ein weiterer Teilaspekt der Erfindung betrifft ein Steuergerät für ein Kraftfahrzeug, umfassend eine Speichereinheit und eine Recheneinheit sowie einen in der Speichereinheit abgelegten Computerprogrammcode, wobei das Steuergerät dazu eingerichtet ist, ein in den vorhergehenden Abschnitten beschriebenes Verfahren durchzuführen, wenn der Computerprogrammcode durch die Recheneinheit ausgeführt wird.

Ein weiterer Teilaspekt der Erfindung betrifft ein Kraftfahrzeug mit einem solchen Steuergerät.

Die verschiedenen, in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: bevorzugtes Ausführungsbeispiel eines Kraftfahrzeuges mit einem Antriebsstrang zur Durchführung eines erfindungsgemäßen Verfahrens,
- Figur 2: ein weiteres bevorzugtes Ausführungsbeispiel eines Kraftfahrzeuges mit einem Antriebsstrang zur Durchführung eines erfindungsgemäßen Verfahrens zum Betreiben des Antriebsstranges, und
- Figur 3: ein Ablaufdiagramm zur Durchführung eines erfindungsgemäßen Verfahrens zum Betreiben eines Antriebsstrangs in einem Kraftfahrzeug.

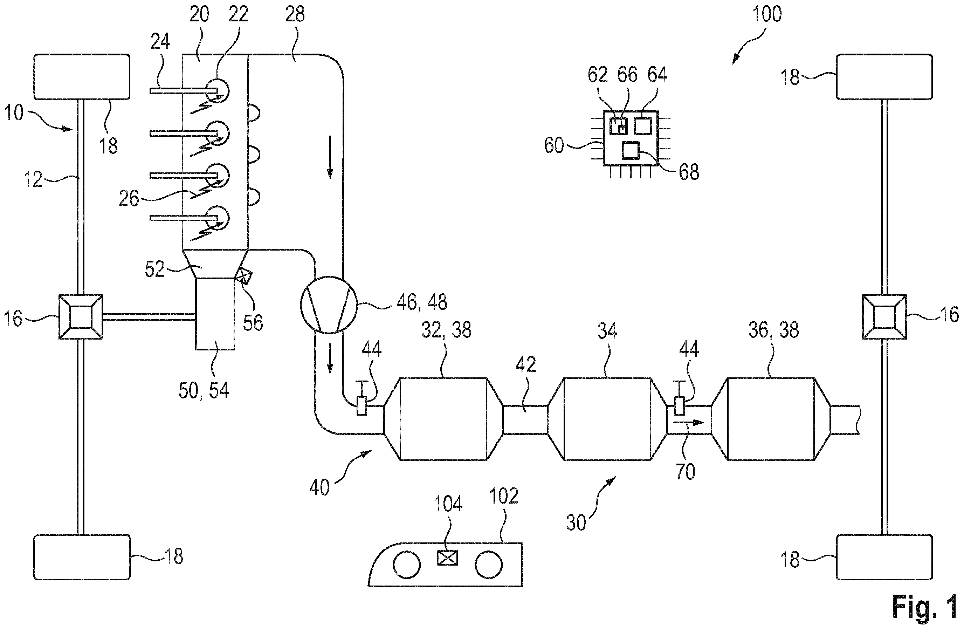

Figur 1 zeigt ein bevorzugtes Ausführungsbeispiel eines Kraftfahrzeuges 100 mit einem Antriebsstrang 10 zur Durchführung eines erfindungsgemäßen Verfahrens. Der Antriebsstrang 10 weist mindestens eine Antriebsachse 12, 14 mit einem Differential 16 auf, wobei die Antriebsachsen 12, 14 mit den Rädern 18 des Kraftfahrzeuges verbunden sind. Die erste Antriebsachse 12 ist mit dem Getriebe 50, insbesondere einem automatisierten Schaltgetriebe 54 verbunden, welches über eine Kupplung 52 mit einem Verbrennungsmotor 20 verbunden ist. Dazu ist an der Kupplung 52 ein Schaltelement 56 zur automatisierten Betätigung der Kupplung 52 angeordnet. Alternativ kann das Getriebe 50 auch als Automatikgetriebe 58 ausgeführt sein. Der Verbrennungsmotor 20 weist mehrere Brennräume 22 auf. An den Brennräumen 22 ist jeweils ein Kraftstoffinjektor 24 zur Einspritzung eines Kraftstoffes in den jeweiligen Brennraum 22 angeordnet. Ferner ist an jedem Brennraum 22 eine Zündkerze 26 zur Entzündung eines zündfähigen Kraftstoff-Luft-Gemischs in dem jeweiligen Brennraum 22 angeordnet. Der Brennraum 22 wird durch einen in Figur 1 nicht dargestellten Kolben begrenzt, welcher verschiebbar in einem Zylinder des Verbrennungsmotors 20 angeordnet ist. Der Kolben ist über einen Pleuel mit einer Kurbelwelle des Verbrennungsmotors 20 verbunden, wobei der Pleuel eine oszillierende Bewegung des Kolbens in eine Drehbewegung der Kurbelwelle überträgt. Der Verbrennungsmotor 20 ist mit seinem Einlass mit einem in Figur 1 nicht dargestellten Luftversorgungssystem und mit seinem Auslass 28 mit einer Abgasanlage 40 verbunden. An den Brennräumen 22 sind Einlassventile und Auslassventile angeordnet, mit welchen eine fluidische Verbindung vom Luftversorgungssystem zu den Brennräumen 22 oder von den Brennräumen 22 zur Abgasanlage 40 geöffnet oder verschlossen werden kann.

Die Abgasanlage 40 umfasst einen Abgaskanal 42 mit einem Abgasnachbehandlungssystem 30, in welchem sich in Strömungsrichtung eines Abgasstromes 70 des Verbrennungsmotors 20 durch die Abgasanlage 40 eine Turbine 46 eines Abgasturboladers 48, stromabwärts der Turbine 46 des Abgasturboladers 48 ein erster Katalysator 32, insbesondere ein Drei-Wege-Katalysator 38, stromabwärts des ersten Katalysators 32 ein Partikelfilter 34 und stromabwärts des Partikelfilters 34 ein zweiter Katalysator 36, insbesondere ein zweiter Drei-Wege-Katalysator 38 befindet.

Stromabwärts der Turbine 46 des Abgasturboladers 48 und stromaufwärts des ersten Katalysators 32 ist ein erster Temperatursensor 44 zur Temperaturmessung des Abgasstroms 70 in der Abgasanlage 40 angeordnet. Stromabwärts des Partikelfilters 34 und stromaufwärts des zweiten Katalysators 36 ist ein zweiter Temperatursensor 44 zur Temperaturmessung des Abgasstroms 70 in der Abgasanlage 40 vorgesehen.

Dem Antriebsstrang 10 ist ein Steuergerät 60 mit einer Speichereinheit 62 und einer Recheneinheit 64 zugeordnet. In der Speichereinheit 62 ist ein Computerprogrammcode 66 abgelegt, welcher bei Ausführung des Computerprogrammcodes 66 durch die Recheneinheit 64 ein erfindungsgemäßes Verfahren zum Betreiben eines Antriebstranges eines Kraftfahrzeugs 100 ausführt. Zudem werden Daten an eine im Steuergerät 60 integrierte On-Board-Monitoring-Einheit 68 übermittelt.

Zudem ist für das Kraftfahrzeug 100 ein Kombiinstrument 102 mit einem Anzeigeelement 104 vorgesehen.

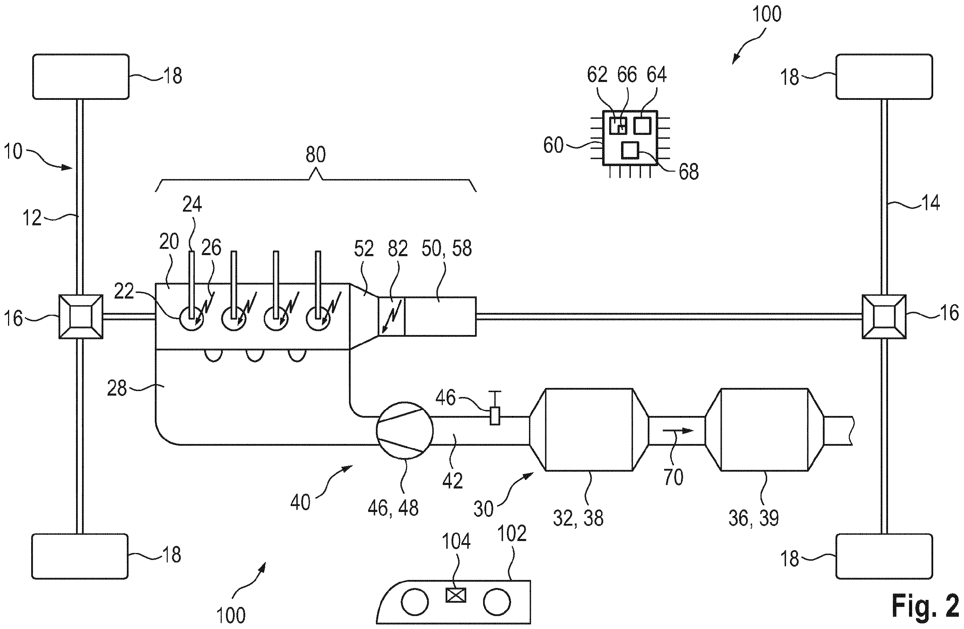

In Figur 2 ist ein alternatives Ausführungsbeispiel eines Kraftfahrzeuges 100 mit einem Antriebsstrang 10, insbesondere mit einem Hybridantrieb 80 zur Durchführung eines erfindungsgemäßen Verfahrens dargestellt. Der Antriebsstrang 10 weist zwei Antriebsachsen 12, 14 mit jeweils einem Differential 16 auf, wobei die Antriebsachsen 12, 14 mit den Rädern 18 des Kraftfahrzeuges 100 verbunden sind. Der Antriebsstrang 10 weist ferner einen Verbrennungsmotor 20, einen elektrischen Antriebsmotor 82 und ein Getriebe 50, insbesondere ein Automatikgetriebe 58 auf. Der Verbrennungsmotor 20 weist mehrere Brennräume 22 auf. An den Brennräumen 22 ist jeweils ein Kraftstoffinjektor 24 zur Einspritzung eines Kraftstoffes in den jeweiligen Brennraum 22 angeordnet. Ferner ist an jedem Brennraum 22 eine Zündkerze 26 zur Entzündung eines zündfähigen Kraftstoff-Luft-Gemischs in dem jeweiligen Brennraum 22 angeordnet. Der Brennraum 22 wird durch einen in Figur 2 nicht dargestellten Kolben begrenzt, welcher verschiebbar in einem Zylinder des Verbrennungsmotors 20 angeordnet ist. Der Kolben ist über einen Pleuel mit einer Kurbelwelle des Verbrennungsmotors 20 verbunden, wobei der Pleuel eine oszillierende Bewegung des Kolbens in eine Drehbewegung der Kurbelwelle überträgt.

In dem in Figur 2 dargestellten Antriebsstrang 10 ist zwischen dem Verbrennungsmotor 10 und einem mit dem Getriebe 50 verbindbaren elektrischen Antriebsmotor 82 eine Kupplung 52 angeordnet. Das Getriebe 50 ist vorzugsweise als ein Automatikgetriebe 58 ausgeführt. Der Verbrennungsmotor 20 ist mit seinem Einlass mit einem in Figur 2 nicht dargestellten Luftversorgungssystem und mit seinem Auslass 28 mit einer Abgasanlage 40 verbunden. An den Brennräumen 22 sind Einlassventile und Auslassventile angeordnet, mit welchen eine fluidische Verbindung vom Luftversorgungssystem zu den Brennräumen 22 oder von den Brennräumen 22 zur Abgasanlage 40 geöffnet oder verschlossen werden kann.

Die Abgasanlage 40 umfasst einen Abgaskanal 42 mit einem Abgasnachbehandlungssystem 30, in welchem sich in Strömungsrichtung eines Abgasstromes 70 des Verbrennungsmotors 20 durch die Abgasanlage 40 eine Turbine 46 eines Abgasturboladers 48, stromabwärts der Turbine 46 des Abgasturboladers 48 ein erster Katalysator 32, insbesondere ein Drei-Wege-Katalysator und stromabwärts des ersten Katalysators 32 ein zweiter Katalysator 36, insbesondere ein Vier-Wege-Katalysator 39 befindet. Stromabwärts der Turbine 46 des Abgasturboladers 48 und stromaufwärts des ersten Katalysators 32 ist ein Temperatursensor 44 zur Temperaturmessung des Abgasstroms 70 in der Abgasanlage 40 angeordnet.

Dem Antriebsstrang 10 ist ein Steuergerät 60 mit einer Speichereinheit 62 und einer Recheneinheit 64 zugeordnet. In der Speichereinheit 62 ist ein Computerprogrammcode 66 abgelegt, welcher bei Ausführung des Computerprogrammcodes 66 durch die Recheneinheit 64 ein erfindungsgemäßes Verfahren zum Betreiben eines Antriebstranges eines Kraftfahrzeugs 100 ausführt. Zudem werden Daten an eine im Steuergerät 60 integrierte On-Board-Monitoring-Einheit 68 übermittelt.

Zudem ist für das Kraftfahrzeug 100 ein Kombiinstrument 102 mit einem Anzeigeelement 104 vorgesehen.

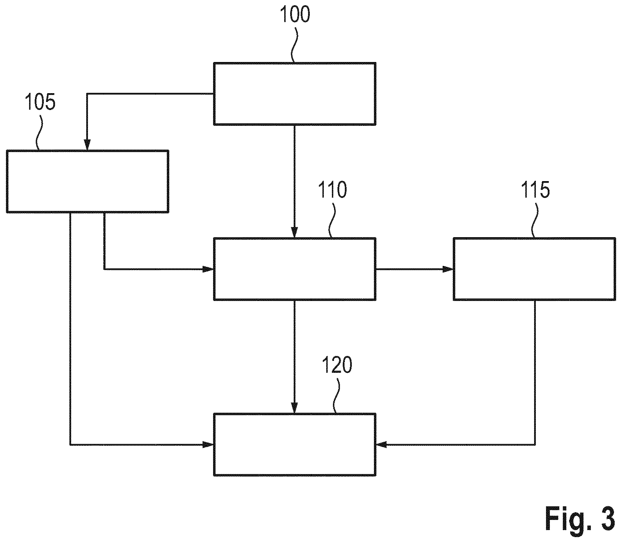

In Figur 3 ist ein Ablaufdiagramm zur Durchführung eines erfindungsgemäßen Verfahrens zum Betreiben eines Antriebsstrangs in einem Kraftfahrzeug dargestellt. In einem ersten Verfahrensschritt <100> wird der Verbrennungsmotor 20 gestartet, wobei eine Drehmoment-übertragende Verbindung zwischen dem Verbrennungsmotor 20 und der Antriebsachse 12, 14 unterbrochen ist oder unterbrochen wird. Dies kann beispielsweise durch ein Öffnen der Kupplung 52 bei einem Schaltgetriebe 54 oder durch das Einlegen der Stellung "N" bei einem Automatikgetriebe 58 erfolgen.

In einem Verfahrensschritt <105> kann eine voraussichtliche Leerlaufzeit bis zur Freigabe berechnet und dem Fahrer, insbesondere durch ein Symbol oder einen Text im Kombiinstrument 102, angezeigt werden. In einem Verfahrensschritt <110> wird zumindest eine Abgasnachbehandlungskomponente 32, 34, 36, 38 des Abgasnachbehandlungssystems 30 durch einen Abgasstrom 70 des Verbrennungsmotors 20 aufgeheizt, während die Drehmoment-übertragende Verbindung unterbrochen ist, bis zumindest eine Freigabebedingung erreicht ist. Die Freigabebedingung kann dabei ein definiertes Zeitintervall, das Erreichen einer Mindesttemperatur einer Abgasnachbehandlungskomponente, die Ermittlung eines Wärmeeintrags, wobei die Freigabe nach Erreichen einer definierten Wärmemenge in das Abgasnachbehandlungssystem 30 erfolgt, sein. Alternativ oder zusätzlich kann die Freigabebedingung die Ermittlung einer Konvertierungsleistung zumindest einer Abgasnachbehandlungskomponente 32, 34, 36, 38 umfassen, wobei eine Freigabe erfolgt, wenn die Konvertierungsleistung der Abgasnachbehandlungskomponente 32, 34, 36, 38 einen definierten Schwellenwert erreicht hat. Ferner kann vorgesehen sein, dass die Freigabe eine Kombination verschiedener Freigabebedingungen umfasst, wobei eine Priorisierung der gleichzeitig bewerteten Freigabebedingungen erfolgt.

In einem Verfahrensschritt <115> können die Abgasnachbehandlungskomponenten 32, 34, 36, 38 zusätzlich außermotorisch durch ein elektrisches Heizelement oder ein Brennersystem aufgeheizt werden, um die Zeit bis zur Freigabe zu verkürzen. Alternativ oder zusätzlich kann die Abgasnachbehandlungskomponente 32, 34, 36, 38 auch durch innermotorische Heizmaßnahmen, beispielsweise eine Verstellung des Zündzeitpunktes in Richtung "spät", aufgeheizt werden.

In einem Verfahrensschritt <120> wird die Drehmoment-übertragenden Verbindung zwischen dem Verbrennungsmotor 20 und der Antriebsachse 12, 14 geschlossen, wenn die Freigabebedingung erreicht ist, sodass ein Antriebsmoment des Verbrennungsmotors 20 auf die Antriebsachse 12, 14 übertragen wird.

### Bezugszeichenliste

- 10: Antriebsstrang
- 12: erste Antriebsachse
- 14: zweite Antriebsachse
- 16: Differential
- 18: Rad
- 20: Verbrennungsmotor
- 22: Brennraum
- 24: Kraftstoffinjektor
- 26: Zündkerze
- 28: Auslass
- 30: Abgasnachbehandlungssystem
- 32: erste Katalysator
- 34: Partikelfilter
- 36: zweiter Katalysator
- 38: Drei-Wege-Katalysator
- 39: Vier-Wege-Katalysator
- 40: Abgasanlage
- 42: Abgaskanal
- 44: Temperatursensor
- 46: Turbine
- 48: Abgasturbolader
- 50: Getriebe
- 52: Kupplung
- 54: Schaltgetriebe
- 56: Schaltelement
- 58: Automatikgetriebe
- 60: Steuergerät
- 62: Speichereinheit
- 64: Recheneinheit
- 66: Computerprogrammcode
- 68: On-Board-Monitoring-Einheit
- 70: Abgasstrom
- 80: Hybridantrieb
- 82: elektrischer Antriebsmotor
- 100: Kraftfahrzeug
- 102: Kombiinstrument
- 104: Anzeigeelement

## Patentansprüche

1. Verfahren zum Betreiben eines Antriebsstrangs (10) in einem Kraftfahrzeug (100), wobei der Antriebsstrang (10) einen Verbrennungsmotor (20) mit einem dem Verbrennungsmotor (20) zugeordneten Abgasnachbehandlungssystem (30) sowie ein Getriebe (50) zur Kraftübertragung eines von dem Verbrennungsmotor (20) erzeugten Antriebsmoments an zumindest eine Antriebsachse (12, 14) des Kraftfahrzeuges (100) aufweist, umfassend folgende Schritte:
- Starten des Verbrennungsmotors (20), wobei eine Drehmoment-übertragende Verbindung zwischen dem Verbrennungsmotor (20) und der Antriebsachse (12, 14) unterbrochen ist oder unterbrochen wird,
- Aufheizen zumindest einer Abgasnachbehandlungskomponente (32, 34, 36, 38) des Abgasnachbehandlungssystems (30) durch einen Abgasstrom (70) des Verbrennungsmotors (20), während die Drehmoment-übertragende Verbindung unterbrochen ist, bis zumindest eine Freigabebedingung erreicht ist,
- Schließen der Drehmoment-übertragenden Verbindung zwischen dem Verbrennungsmotor (20) und der Antriebsachse (12, 14), wenn die Freigabebedingung erreicht ist, sodass ein Antriebsmoment des Verbrennungsmotors (20) auf die Antriebsachse (12, 14) übertragen wird.

2. Verfahren nach Anspruch 1, wobei die Freigabebedingung ein definiertes Zeitintervall ist, welches ab dem Start des Verbrennungsmotors (20) beginnt.

3. Verfahren nach Anspruch 1 oder 2, wobei die Freigabebedingung eine Ermittlung einer Temperatur zumindest einer Abgasnachbehandlungskomponente (32, 34, 36, 38) umfasst, wobei die Freigabe nach Erreichen einer definierten Mindesttemperatur für die Abgasnachbehandlungskomponente (32, 34, 36, 38) erfolgt.

4. Verfahren nach einem der Ansprüche 1 bis 3, wobei die Freigabebedingung eine Ermittlung eines Wärmeeintrags in das Abgasnachbehandlungssystem (30) umfasst, wobei die Freigabe nach Erreichen einer definierten Wärmemenge in das Abgasnachbehandlungssystem (30) erfolgt.

5. Verfahren nach einem der Ansprüche 1 bis 4, wobei die Freigabebedingung eine Ermittlung einer Konvertierungsleistung zumindest einer Abgasnachbehandlungskomponente (32, 34, 36, 38) umfasst, wobei eine Freigabe erfolgt, wenn die Konvertierungsleistung der Abgasnachbehandlungskomponente (32, 34, 36, 38) einen definierten Schwellenwert erreicht hat.

6. Verfahren nach zwei der vorhergehenden Ansprüche, wobei die Freigabebedingung zumindest zwei Bedingungen aus der Gruppe
- definiertes Zeitintervall ab dem Start des Verbrennungsmotors (20)
- definierte Mindesttemperatur für die Abgasnachbehandlungskomponente (32, 34, 36, 38)
- definierte, in das Abgasnachbehandlungssystem (30) eingetragene Wärmemenge
- definierter Schwellenwert der Konvertierungsleistung der Abgasnachbehandlungskomponente (32, 34, 36, 38)
umfasst.

7. Verfahren nach einem der Ansprüche 1 bis 6, wobei vom Start des Verbrennungsmotors (20) bis zum Erreichen der Freigabe zusätzlich innermotorische Heizmaßnahmen ausgeführt werden, um den Zeitraum bis zum Erreichen der Freigabebedingung zu verkürzen.

8. Verfahren nach einem der Ansprüche 1 bis 7, wobei bis zum Erreichen der Freigabebedingung zusätzlich außermotorischen Heizmaßnahmen durchgeführt werden, um den Zeitraum bis zum Erreichen der Freigabebedingung zu verkürzen.

9. Steuergerät (60) für ein Kraftfahrzeug (100), umfassend eine Speichereinheit (62) und eine Recheneinheit (64) sowie einen in der Speichereinheit (62) abgelegten Computerprogrammcode (66), wobei das Steuergerät (60) dazu eingerichtet ist, ein Verfahren nach einem der Ansprüche 1 bis 8 durchzuführen, wenn der Computerprogrammcode (66) durch die Recheneinheit (64) ausgeführt wird.

10. Kraftfahrzeug (100) mit einem Steuergerät nach Anspruch 9.
